(19) Europäisches Patentamt / European Patent Office / Office européen des brevets

(11) EP 2 716 784 A1

(12) EUROPEAN PATENT APPLICATION

(43) Date of publication:
09.04.2014 Bulletin 2014/15

(51) Int Cl.:
*C22C 38/00* (2006.01)

(21) Application number: 13187007.3

(22) Date of filing: 02.10.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 05.10.2012 JP 2012222887

(71) Applicant: JTEKT CORPORATION
Osaka-shi
Osaka 542-8502 (JP)

(72) Inventors:
• YOSHIDA, Wataru
Osaka-shi, Osaka 542-8502 (JP)
• KIZAWA, Katsuhiko
Osaka-shi, Osaka 542-8502 (JP)

(74) Representative: Winter, Brandl, Fürniss, Hübner, Röss, Kaiser, Polte - Partnerschaft
Patent- und Rechtsanwaltskanzlei
Bavariaring 10
80336 München (DE)

(54) **Rolling sliding member, method of manufacturing the same, and rolling bearing**

(57) A steel material which contains 0.16 to 0.19% of carbon by mass, 0.15 to 0.35% of silicon by mass, 0.20 to 1.55% of manganese by mass, and 2.5 to 3.2% of chromium by mass, of which remaining part is formed of iron and incidental impurities, and which contains 0.01 to 0.2% of nickel by mass as an incidental impurity and higher than or equal to 0.001% and lower than 0.15% of molybdenum by mass as an incidental impurity, and which has a hardenability index of higher than or equal to 5.4 is subjected to a carbonitriding step, a process annealing step, a quenching step, a tempering step and a finishing step. Thus, there is obtained a rolling sliding member made of the steel material, and having satisfactory corrosion resistance and crack resistance and having a sufficiently long useful life even under an environment where rust is easily formed.

FIG.1

**Description**

BACKGROUND OF THE INVENTION

1. Field of the Invention

The invention relates to a rolling sliding member, a method of manufacturing the rolling sliding member, and a rolling bearing.

2. Description of Related Art

In order to achieve a required strength, a material having high hardenability is required for a rolling sliding member for a large-sized bearing used in, for example, an industrial machine. The environment under which, for example, a bearing for a rolling mill in steel production equipment is used has become severer. Therefore, in addition to improvement in crack resistance against an impact load or the like, improvement in corrosion resistance or the like under an environment where rust due to, for example, entry of rolling water is easily formed and improvement in the rolling fatigue life of a bearing component have been demanded. In recent years, due to growing demands for an increase in the useful life of such a large-sized bearing component, an attempt to improve the rolling fatigue life is made by adding elements, such as silicon, nickel, chromium and molybdenum (refer to, for example, Japanese Patent Application Publication No. 2005-154784 (JP 2005-154784 A) and Japanese Patent Application Publication No. 2007-77422 (JP 2007-77422 A)).

However, steel material contains large amounts of nickel, molybdenum, and the like, that are rare metals. Therefore, the steel material is expensive, which increases the cost of manufacturing rolling bearings. On the other hand, a steel material that contains neither nickel nor molybdenum may be used. However, in this case, the crack resistance of a bearing component tends to be low. Therefore, there have been growing demands for development of bearing components that are manufactured at low cost, that have satisfactory corrosion resistance and crack resistance, and that have a sufficiently long useful life even under an environment where rust is easily formed.

SUMMARY OF THE INVENTION

One object of the invention is to provide a rolling sliding member that has satisfactory corrosion resistance and crack resistance, and that has a sufficiently long useful life even under an environment where rust is easily formed, a method of manufacturing the rolling sliding member, and a rolling bearing.

An aspect of the invention relates to a rolling sliding member, wherein: the rolling sliding member is made of a base material that is obtained from a steel material which contains 0.16 to 0.19% of carbon by mass, 0.15 to 0.35% of silicon by mass, 0.20 to 1.55% of manganese by mass, and 2.5 to 3.2% of chromium by mass, of which remaining part is formed of iron and incidental impurities, and which contains 0.01 to 0.2% of nickel by mass as an incidental impurity and higher than or equal to 0.001% and lower than 0.15% of molybdenum by mass as an incidental impurity, and which has a hardenability index of higher than or equal to 5.4, the hardenability index being expressed by Formula (I):

$$X_C \bullet X_{Si} \bullet X_{Mn} \bullet X_{Cr} \bullet X_{Ni} \bullet X_{Mo} \qquad (I)$$

(where $X_C$ is 0.5346 x carbon content (mass%) + 0.0004, $X_{Si}$ is 0.7xsilicon content (mass%) + 1, $X_{Mn}$ when a manganese content is higher than or equal to 0.20% by mass and lower than 1.25% by mass is 3.3844 x manganese content (mass%) + 0.9826, $X_{Mn}$ when a manganese content is higher than or equal to 1.25% by mass and lower than or equal to 1.55% by mass is 5.1 x manganese content (mass%) - 1.12, $X_{Cr}$ is 2.1596 x chromium content (mass%) + 1.0003, $X_{Ni}$ is 0.382 x nickel content (mass%) + 0.99, and $X_{Mo}$ is 3 x molybdenum content (mass%) + 1), the base material being obtained by subjecting the steel material to carbonitriding to achieve an effective case depth of 1.5 to 8 mm; the rolling sliding member has a rolling sliding surface that is in at least one of rolling contact and sliding contact relative to an opposed member; and a carbon content in a surface layer in a range from a surface of the rolling sliding surface to a depth of 0.05 mm is 0.8 to 1.2% by mass, a nitrogen content in the surface layer in the range from the surface of the rolling sliding surface to a depth of 0.05 mm is 0.05 to 0.4% by mass, a Vickers hardness at a position at a depth of 0.1 mm from the surface is 690 to 800, an amount of retained austenite at a position at a depth of 0.1 mm from the surface is 15 to 40% by volume, an area ratio of carbide at a position at a depth of 0.03 mm from the surface is 1.5 to 8%, a Vickers hardness of a portion that is located at a center, in an axially longitudinal direction, of a portion at which the rolling sliding surface is formed and that is located at a center, in a thickness direction, of the portion at which the rolling sliding surface is formed is 300 to 510, and a martensitic transformation ratio of the portion that is located at the center, in the axially longitudinal direction, of the portion at which the rolling sliding surface is formed and that is located at the center, in the thickness direction, of the portion at which the rolling sliding surface is formed is 50 to 100%.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a sectional view illustrating main portions of a four-row tapered roller bearing device that serves as a rolling bearing including rolling sliding members according to an embodiment of the invention;
FIGs. 2A to 2G illustrate a process chart of a method of manufacturing an outer ring that is one of the rolling sliding members according to the embodiment of the invention;
FIG. 3 is a diagram illustrating heat treatment conditions (Conditions (A) shown in Table 1) in a first example;
FIG. 4 is a diagram illustrating heat treatment conditions (Conditions (B) shown in Table 1) in first and fifth comparative examples;
FIG. 5 is a diagram illustrating heat treatment conditions (Conditions (C) shown in Table 1) in second and third comparative examples;
FIG. 6 is a diagram illustrating heat treatment conditions (Conditions (D) shown in Table 1) in a fourth comparative example;
FIG. 7A is a front view of main portions of a testing machine used to evaluate the useful life in a first test example; and
FIG. 7B is a side view of the main portions of the testing machine.

DETAILED DESCRIPTION OF EMBODIMENTS

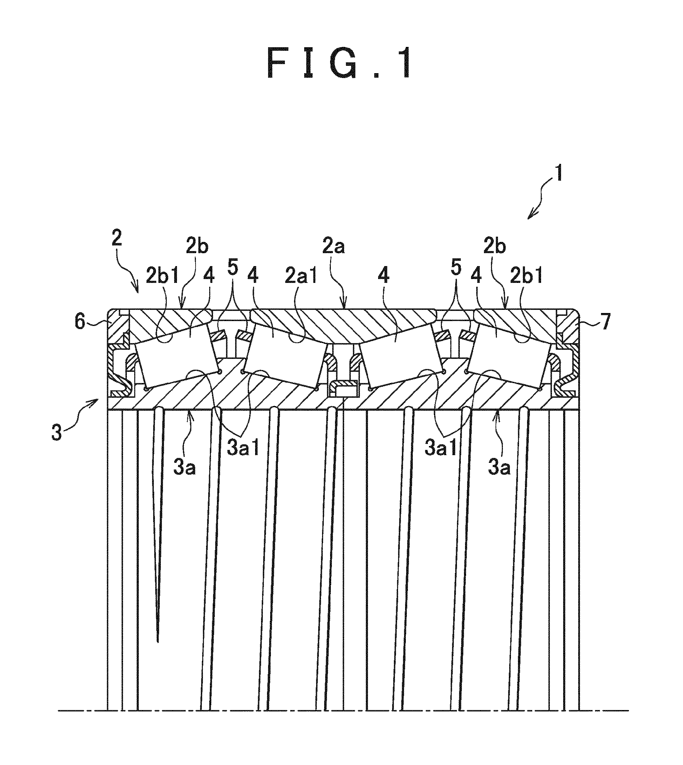

Hereinafter, rolling sliding members (an outer ring member, an inner ring member, and rolling elements) according to an embodiment of the invention will be described with reference to the accompanying drawing. FIG. 1 is a sectional view illustrating main portions of a four-row tapered roller bearing device 1 that serves as a rolling bearing including the rolling sliding members according to the embodiment of the invention.

The four-row tapered roller bearing device 1 shown in FIG. 1 is installed at a roll neck (not shown) at each end of each roll for a rolling mill, and supports the roll such that the roll is rotatable. The four-row tapered roller bearing device 1 includes an outer ring 2, an inner ring 3, tapered rollers 4, annular cages 5, and a pair of sealing devices 6, 7. The outer ring 2 is fixedly fitted to an inner periphery of a housing (not shown) provided for the rolling mill. The inner ring 3 is concentrically arranged radially inward of the outer ring 2. The tapered rollers 4 are a plurality of rolling elements that are arranged between the outer ring 2 and the inner ring 3. The cages 5 retain the tapered rollers 4 at predetermined intervals in the circumferential direction. The sealing devices 6, 7 form an annular sealed space between the outer ring 2 and the inner ring 3.

The inner ring 3 is a rotary ring that rotates together with the roll of the rolling mill. The inner ring 3 is formed of a pair of cylindrical inner ring members 3a that are arranged next to each other in the axial direction. A pair of inner ring raceway surfaces 3a1 is formed on an outer peripheral surface of each inner ring member 3a. The tapered rollers 4 roll on the inner ring raceway surfaces 3a1. The roll neck is fixedly fitted to an inner peripheral surface of the inner ring 3.

The outer ring 2 is a fixed ring that is fixedly fitted to the inner periphery of the housing of the rolling mill. The outer ring 2 is formed of a cylindrical first outer ring member 2a and a pair of cylindrical second outer ring members 2b. The first outer ring member 2a is arranged at an axial center of the four-row tapered roller bearing device 1. The second outer ring members 2b are arranged at respective axial ends of the first outer ring member 2a. The first outer ring member 2a and the second outer ring members 2b are arranged next to each other in the axial direction. A pair of outer ring raceway surfaces 2a1 is formed on an inner peripheral surface of the first outer ring member 2a. The tapered rollers 4 roll on the outer ring raceway surfaces 2a1. The outer ring raceway surfaces 2a1 face inner ring raceway surfaces 3a1 that are formed at axially inner side portions of the inner ring members 3a. Outer ring raceway surfaces 2b1 are formed on inner peripheral surfaces of the second outer ring members 2b. The tapered rollers 4 roll on the outer ring raceway surfaces 2b1. The outer ring raceway surfaces 2b1 face the inner ring raceway surfaces 3a1 that are formed at axially outer side portions of the inner ring members 3a.

The tapered rollers 4 are rollably arranged between the inner ring raceway surfaces 3a1 and the outer ring raceway surfaces 2a1, and between the inner ring raceway surfaces 3a1 and the outer ring raceway surfaces 2b1. In addition, in the four-row tapered roller bearing device 1 according to the present embodiment, the tapered rollers 4 are arranged in four rows aligned in the axial direction.

The sealing device 6 is arranged at one axial end portion of the four-row tapered roller bearing device 1. The sealing device 6 seals an opening, on one side in the axial direction, between the outer ring 2 and the inner ring 3. In addition, the sealing device 7 is arranged at the other axial end portion of the four-row tapered roller bearing device 1. The sealing device 7 seals an opening, on the other side in the axial direction, between the outer ring 2 and the inner ring 3.

The outer ring 2, the inner ring 3, and the tapered rollers 4 are all made of a base material that is obtained from a steel material which contains 0.16 to 0.19% of carbon by mass, 0.15 to 0.35% of silicon by mass, 0.20 to 1.55% of manganese by mass, 2.5 to 3.2% of chromium by mass, of which remaining part is formed of iron and incidental impurities, and which contains 0.01 to 0.2% of nickel by mass as an incidental impurity and higher than or equal to 0.001% and lower than 0.15% of molybdenum by mass as an incidental impurity, and which has a hardenability index of higher than or equal to 5.4, the hardenability index being expressed by Formula (I):

$$X_C \bullet X_{Si} \bullet X_{Mn} \bullet X_{Cr} \bullet X_{Ni} \bullet X_{Mo} \qquad (I)$$

(where $X_C$ is 0.5346 x carbon content (mass%) + 0.0004, $X_{Si}$ is 0.7xsilicon content (mass%) + 1, $X_{Mn}$ when a manganese content is higher than or equal to 0.20% by mass and lower than 1.25% by mass is 3.3844 x manganese content (mass%) + 0.9826, $X_{Mn}$ when a manganese content is higher than or equal to 1.25% by mass and lower than or equal to 1.55% by mass is 5.1 x manganese content (mass%) - 1.12, $X_{Cr}$ is 2.1596 x chromium content (mass%) + 1.0003, $X_{Ni}$ is 0.382 x nickel content (mass%) + 0.99, and $X_{Mo}$ is 3 x molybdenum content (mass%) + 1), the base material being obtained by subjecting the steel material to carbonitriding to achieve an effective case depth of 1.5 to 8 mm.

The carbon content in the steel material is higher than or equal to 0.16% by mass from the viewpoint of suppressing carburizing cost and ensuring sufficient toughness, and is lower than or equal to 0.19% by mass from the viewpoint of setting the martensite hardness within a predetermined range and ensuring sufficient internal toughness. The silicon content in the steel material is higher than or equal to 0.15% by mass from the viewpoint of ensuring a sufficient rolling fatigue life, and is lower than or equal to 0.35% by mass from the viewpoint of ensuring sufficient heat treatment characteristic (long-time carburizing characteristic). The manganese content in the steel material is higher than or equal to 0.20% by mass from the viewpoint of obtaining deoxidation or desulfurization effect at the time of forming an ingot steel material, and is lower than or equal to 1.55% by mass from the viewpoint of ensuring sufficient grain boundary strength and sufficient internal toughness at a quenched portion inside the steel material. The chromium content in the steel material is higher than or equal to 2.5% by mass from the viewpoint of ensuring a sufficient rolling fatigue life and rust resistance, and is lower than or equal to 3.2% by mass from the viewpoint of ensuring sufficient heat treatment characteristic (long-time carburizing characteristic) during manufacturing and suppressing reduction in useful life due to formation of massive carbides. As described above, the steel material contains 2.5 to 3.2% of chromium by mass. Therefore, when such a steel material is used, it is possible to ensure sufficient rust resistance even if large amounts of nickel and molybdenum that are usually used to improve the rust resistance of steel material are not added.

Examples of incidental impurities mainly include nickel and molybdenum can be given. The nickel content in the steel material is lower than or equal to 0.2% by mass from the viewpoint of reducing material cost. Note that the lower limit of the nickel content in the steel material is desirably such a value that nickel may be treated as an incidental impurity, and is usually 0.01% by mass. The molybdenum content in the steel material is lower than 0.15% by mass, desirably, equal to or lower than 0.03% by mass, from the viewpoint of reducing material cost. Note that the lower limit of the molybdenum content in the steel material is desirably such a value that molybdenum may be treated as an incidental impurity, and is usually 0.001 % by mass.

Note that, the iron content in the steel material is obtained by subtracting the carbon content, the silicon content, the manganese content, the chromium content and the content of incidental impurities from the total composition of the steel material.

The steel material has a hardenability index higher than or equal to 5.4. The hardenability index is higher than or equal to 5.4 from the viewpoint of ensuring sufficient toughness, and is lower than or equal to 9.0 from the viewpoint of reducing material cost and manufacturing cost. Note that Formula (I) is derived on the basis of ASTM A255-02.

The carbon content in a surface layer, within a range from a surface (hereinafter, referred to as "surface of a rolling sliding surface") to a depth of 0.05 mm, of each of the outer ring raceway surfaces 2a1 of the first outer ring member 2a that constitutes the outer ring 2, the outer ring raceway surfaces 2b1 of the second outer ring members 2b that constitute the outer ring 2, the inner ring raceway surfaces 3a1 of the inner ring members 3a that constitute the inner ring 3, and the rolling contact surfaces of the tapered rollers 4 is higher than or equal to 0.8% by mass from the viewpoint of ensuring a predetermined hardness, and is lower than or equal to 1.2% by mass from the viewpoint of ensuring a predetermined carbide area ratio. Note that, in this specification, the "surface layer within a range from a surface to a depth of 0.05 mm" means a range from a surface of each rolling sliding surface to a position at a depth of 0.05 mm from the surface of the rolling sliding surface.

The nitrogen content in the surface layer, within the range from the surface of the rolling sliding surface to a depth of 0.05 mm, of each of the first outer ring member 2a and the second outer ring members 2b that constitute the outer ring 2, the inner ring members 3a that constitute the inner ring 3, and the tapered rollers 4 is higher than or equal to 0.05% by mass from the viewpoint of ensuring a sufficiently long useful life, and is lower than or equal to 0.4% by mass from the viewpoint of ensuring a sufficiently long useful life by ensuring a predetermined amount of retained austenite at a position at a depth of 0.1 mm from the rolling sliding surface. The first outer ring member 2a, the second outer ring members 2b, the inner ring members 3a, and the tapered rollers 4, which are the rolling sliding members according to the present embodiment, are all made of the base material that is obtained by subjecting the steel material to carbonitriding such that an effective case depth of 1.5 to 8 mm is achieved and the nitrogen content in the surface layer is 0.05 to 0.4% by mass. Therefore, the corrosion resistance of the rolling sliding members in the present embodiment is higher than that of rolling sliding members made of a base material that is obtained by subjecting the steel material to carburizing such that an effective case depth of 1.5 to 8 mm is achieved. Note that, in this specification, "effective case depth" means a depth from a surface of each rolling sliding surface to a position at which the Vickers hardness is 550.

The Vickers hardness at a position at a depth of 0.1 mm from the surface of each rolling sliding surface is higher than or equal to 690 (Rockwell C-scale hardness of 59.7) from the viewpoint of ensuring a sufficient rolling fatigue life, and is lower than or equal to 800 (Rockwell C-scale hardness of 64.0) from the viewpoint of ensuring a sufficient surface originated flaking life and crack resistance. Note that the Vickers hardness at a position at a depth of 0.1 mm from the surface of each rolling sliding surface is measured as follows. The rolling sliding member is cut from the surface of its rolling sliding surface in its depth direction, and then a Vickers indenter is placed at a position at a depth of 0.1 mm from the surface of the rolling sliding surface to measure the Vickers hardness. In addition, the measured Vickers hardness is converted into the Rockwell C-scale hardness.

The amount of retained austenite at a position at a depth of 0.1 mm from the surface of each rolling sliding surface is higher than or equal to 15% by volume from the viewpoint of ensuring an amount of retained austenite sufficient to achieve a sufficient surface originated flaking life, and is lower than or equal to 40% by volume from the viewpoint of ensuring sufficient surface hardness to ensure a sufficient surface originated flaking life.

The area ratio of carbide at a position at a depth of 0.03 mm from the surface of each rolling sliding surface is higher than or equal to 1.5% from the viewpoint of ensuring sufficient structural stability by precipitating chromium-based carbide having favorable structural stability and improving precipitation strengthening amount, and is lower than or equal to 8% from the viewpoint of further improving the useful life by reducing the amount of coarse precipitate (for example, precipitate having a grain diameter of 10 $\mu$m) of carbide in the surface layer. Note that the area ratio of the carbide is an area ratio of carbide at a cut surface obtained by cutting each rolling sliding member at a depth of 0.03 mm from the surface of the rolling sliding surface of the rolling sliding member. The area ratio of the carbide is calculated as follows. The rolling sliding member is immersed in an etchant containing 5% of picric acid alcohol by mass for ten seconds to be corroded, and then the SE image (1000 $\mu$m$^2$) of a corroded surface is observed by a scanning electron microscope (produced by Shimadzu Corporation, Product Name: EPMA-1600, 3000x magnification).

The Vickers hardness at a portion that is located at the center, in the axially longitudinal direction, of a portion at which the rolling sliding surface is formed and that is located at the center, in the thickness direction, of the portion at which the rolling sliding surface is formed (hereinafter, referred to as "sectional center portion") is higher than or equal to 300 (Rockwell C-scale hardness of 29.8) from the viewpoint of ensuring sufficient static strength as a rolling bearing, and is lower than or equal to 510 (Rockwell C-scale hardness of 49.8) from the viewpoint of ensuring sufficient crack resistance as a rolling bearing. Note that, in this specification, the Vickers hardness at the sectional center portion is measured by placing the Vickers indenter at the sectional center portion in the rolling sliding member. In addition, the measured Vickers hardness is converted into the Rockwell C-scale hardness. When the rolling sliding member is the outer ring or the inner ring, the sectional center portion is a portion that is located at the center, in the axially longitudinal direction, of a portion at which the raceway surface is formed, and that is located at the center, in the thickness direction, of the portion at which the raceway surface is formed. When the rolling sliding member is the rolling element, the sectional center portion is a portion that is located at the center, in the axially longitudinal direction, of a portion at which the rolling contact surface is formed, and that is located at the center, in the thickness direction, of the portion at which the rolling contact surface is formed.

The martensitic transformation ratio at the sectional center portion is higher than or equal to 50% from the viewpoint of ensuring sufficient toughness. In addition, the martensitic transformation ratio at the sectional center portion is preferably near 100% because the toughness improves as the martensite rate increases. The martensitic transformation ratio is calculated as follows. The SE image (three to five fields of view, 36000 to 60000 $\mu$m$^2$) of a ground surface of the sectional center portion is captured by a scanning electron microscope (produced by Shimadzu Corporation, Product Name: EPMA-1600, 1000x magnification), the portion corresponding to martensite is shaded, and the ratio of the area of the shaded portion to the area of the SEM image is calculated.

Note that the first outer ring member 2a and second outer ring members 2b that constitute the outer ring 2, the inner ring members 3a that constitute the inner ring 3 and the tapered rollers 4 are manufactured by a method of manufacturing a rolling sliding member according to an embodiment of the invention, described below.

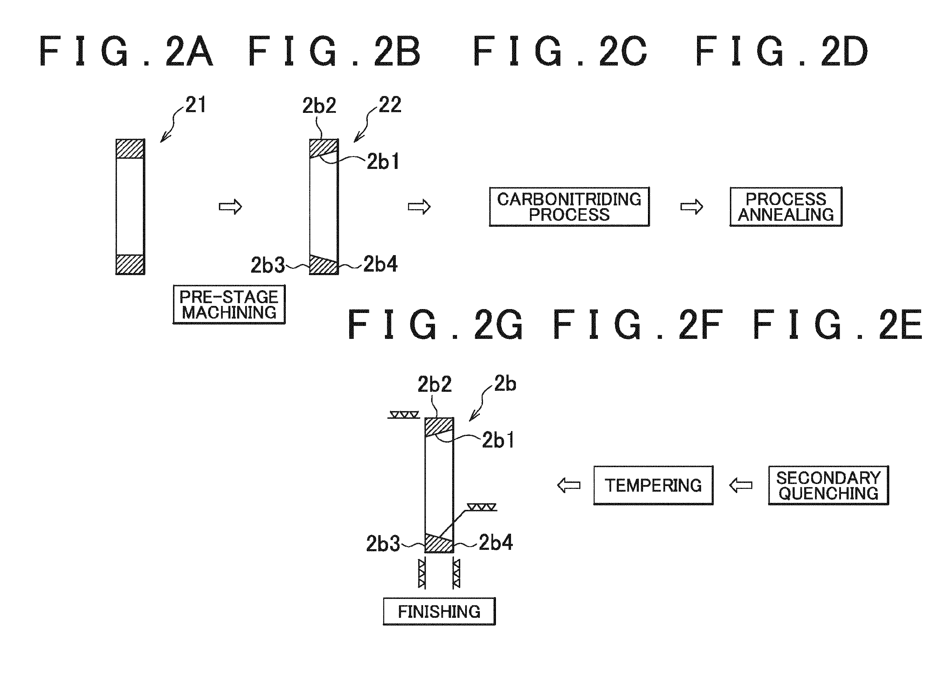

Next, a method of manufacturing the outer ring (second outer ring members) will be described as an example of the method of manufacturing a rolling sliding member. FIGs. 2A to 2G illustrate a process chart of the method of manufacturing a rolling sliding member according to the embodiment of the invention.

First, an annular blank 21 (see FIG. 2A), which will be the second outer ring member, made of the steel material is manufactured, the obtained annular blank 21 is subjected to cutting, or the like, to be machined into a predetermined shape to thereby obtain a semi-finished product 22, which will be the second outer ring, having grinding allowance at portions at which the raceway surface 2b1, an outer peripheral surface 2b2 and end faces 2b3, 2b4 will be formed ("pre-stage machining process", see FIG. 2B). In the manufacturing method according to the present embodiment, there is used the steel material in which the contents of nickel and molybdenum, which are expensive, are equal to or lower than 0.2% by mass and lower than 0.1% by mass, respectively. Thus, it is possible to manufacture the rolling sliding member at low material cost.

Next, the obtained semi-finished product 22 is placed in a carbonitriding furnace. After that, the semi-finished product 22 is heated at a carburizing temperature of 930 to 990°C in the atmosphere (carbonitriding atmosphere) having a carbon potential of 0.8 to 1.1 and an ammonia concentration of 2 to 10% by volume. Then, the semi-finished product 22 is rapidly quenched. Thus, a semi-finished product having an effective case depth of 1.5 to 8 mm is obtained ("carbonitriding process", FIG. 2C).

The carbon potential of the carbonitriding atmosphere is higher than or equal to 0.8 from the viewpoint of ensuring a sufficient hardness at the surface, and is lower than or equal to 1.1 from the viewpoint of further improving the useful life by reducing the amount of coarse precipitate (for example, precipitate having a grain diameter of 10 $\mu$m) of carbide in the surface layer.

The ammonia concentration of the carbonitriding atmosphere is higher than or equal to 2% by volume from the viewpoint of ensuring a sufficiently long useful life, and is lower than or equal to 10% by volume, desirably, lower than or equal to 8% by volume from the viewpoint of ensuring a sufficiently long useful life by ensuring a predetermined amount of retained austenite at a position at a depth of 0.1 mm from the surface of the rolling sliding surface.

The carbonitriding temperature is higher than or equal to 930°C from the viewpoint of shortening the carbonitriding time, and is lower than or equal to 990°C from the viewpoint of further improving the useful life by reducing the amount of coarse precipitate (for example, precipitate having a grain diameter of 10 $\mu$m) of carbide in the surface layer. In addition, the carbonitriding time is longer than or equal to 10 hours from the viewpoint of obtaining a carburizing case depth sufficient for strengthening of the surface layer. The semi-finished product 22 is rapidly quenched through oil quenching. The semi-finished product 22 is placed in an oil bath filled with cooling oil. The temperature of cooling oil in the oil bath is usually 60 to 180°C.

Subsequently, the semi-finished product is heated at 630 to 690°C ("process annealing process", FIG. 2D). In the process annealing process, the annealing temperature is higher than or equal to 630°C from the viewpoint of decomposing retained austenite produced in the carburizing process near a transformation point $A_1$, and is lower than or equal to 690°C from the viewpoint of setting the annealing temperature to be lower than or equal to a transformation point $A_{cm}$ and a transformation point $A_3$ to avoid austenitizing. The annealing time is usually at least 0.5 hours, for example, 0.5 to 10 hours. Cooling is performed by, for example, air cooling or radiational cooling. Note that, in this specification, "air cooling" refers to a method of cooling the semi-finished product by applying air flow to the semi-finished product, and "radiational cooling" refers to a method of cooling the semi-finished product by leaving the semi-finished product in the atmospheric air.

Subsequently, the semi-finished product is subjected to quenching at 820 to 850°C ("secondary quenching process", FIG. 2E). The quenching temperature is higher than or equal to 820°C from the viewpoint of forming a sufficient amount of martensite, and is lower than or equal to 850°C from the viewpoint of suppressing an excessive increase in grain size and suppressing an excessive increase in the amount of retained austenite. The quenching time is usually at least 1 hour, for example, 1 to 5 hours from the viewpoint of carrying out uniform quenching. The semi-finished product 22 is rapidly quenched through oil quenching. The semi-finished product 22 is placed in an oil bath filled with cooling oil. The temperature of cooling oil in the oil bath is usually 60 to 180°C.

Subsequently, the semi-finished product is subjected to tempering at 160 to 200°C ("tempering process", FIG. 2F). In the tempering process, the tempering temperature is higher than or equal to 160°C from the viewpoint of ensuring sufficient heat resistance as a rolling bearing, and is lower than or equal to 200°C from the viewpoint of ensuring a predetermined hardness. The tempering time is usually 1 to 5 hours, preferably, equal to or longer than 2 hours, from the viewpoint of carrying out uniform tempering. Rapid cooling is performed by, for example, air cooling or radiational cooling.

After that, portions of the semi-finished product, which will be the raceway surface 2b1, the outer peripheral surface 2b2 and the end faces 2b3, 2b4 of the second outer ring member 2b, after tempering are subjected to grinding finishing, and the raceway surface 2b1 is subjected to super finishing to have a predetermined precision (see FIG. 2G, "finishing process"). In this way, a finished product, that is, the second outer ring member 2b is obtained. In the obtained second outer ring member 2b, the raceway surface 2b1, the outer peripheral surface 2b2 and the end faces 2b3, 2b4 are ground portions.

Hereafter, the invention will be described in more detail using examples. However, the invention is not limited to these examples.

Steel materials having compositions shown in Table 1 were machined into predetermined shapes to manufacture the semi-finished products that will be the first outer ring member 2a and the second outer ring member 2b that constitute the outer ring 2, the inner ring member 3a that constitutes the inner ring 3 and the tapered roller 4, of the four-row tapered roller bearing device 1 serving as a rolling bearing. The first outer ring member 2a, the second outer ring member 2b and the inner ring member 3a respectively have grinding allowances at portions at which the raceway surfaces 2a1, 2b1 and 3a1 will be formed. In addition, the tapered roller 4 that serves as a rolling element has a grinding allowance at a portion at which the rolling surface will be formed. Note that, $X_{Mn}$ in each comparative example in which the manganese content is less than 1.25% by mass is calculated according to an equation, $X_{Mn} = 3.8844 \times$ manganese content (% by mass) + 0.9826, and $X_{Mn}$ in each comparative example in which the manganese content is equal to or greater than 1.25% by mass is calculated according to an equation, $X_{Mn} = 5.1 \times$ manganese content (% by mass) - 1.12.

[Table 1]

| | Content | | | | | | | Hardenability index (Value of Formula (I)) | Conditions |
|---|---|---|---|---|---|---|---|---|---|
| | C Content (mass%) | Si Content (mass%) | Mn Content (mass%) | Cr Content (mass%) | Incidental impurities | | | | |
| | | | | | Ni Content (mass%) | Mo Content (mass%) | Fe | | |
| First Example | 0.17 | 0.25 | 1.52 | 2.9 | 0.1 | 0.03 | Remaining part | 5.8 | (A) (FIG. 3) |
| First Comparative Example | 0.2 | 0.5 | 0.6 | 0.8 | 3 | 0.3 | Remaining part | 4.8 | (B) (FIG. 4) |
| Second Comparative Example | 0.15 | 0.25 | 0.5 | 1.8 | 2.2 | 0.8 | Remaining part | 7.7 | (C) (FIG. 5) |
| Third Comparative Example | 0.3 | 0.4 | 1 | 1.5 | 0.1 | 1 | Remaining part | 15.7 | (C) (FIG. 5) |
| Fourth Comparative Example | 0.17 | 0.5 | 2 | 1.8 | 0.1 | 0.03 | Remaining part | 6.1 | (D) (FIG. 6) |
| Fifth Comparative Example | 0.15 | 0.25 | 0.5 | 0.8 | 4 | 0.15 | Remaining part | 2.5 | (B) (FIG. 4) |

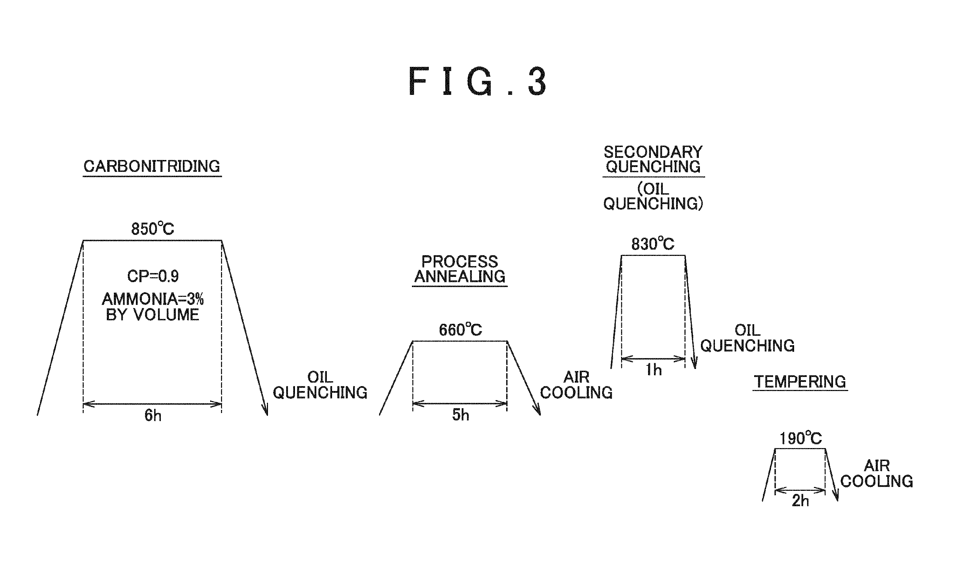

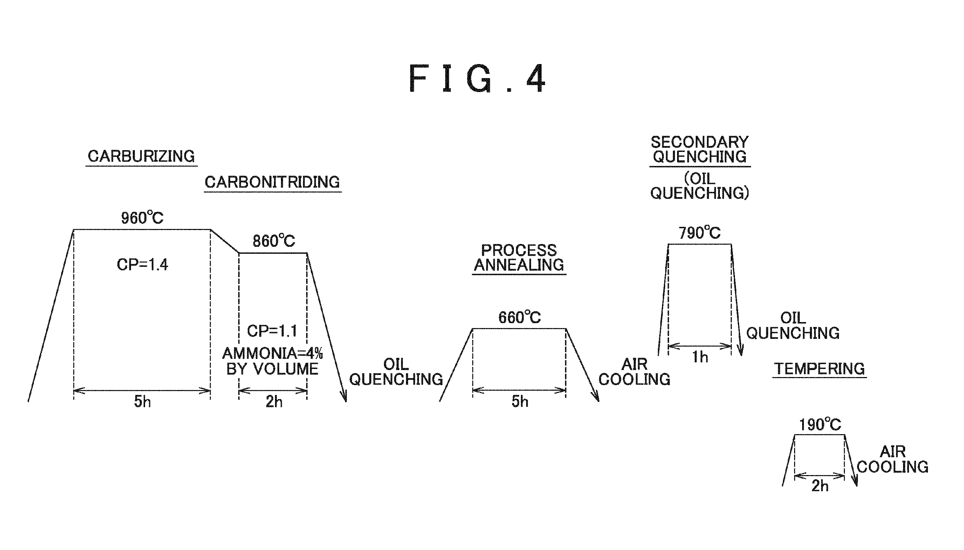

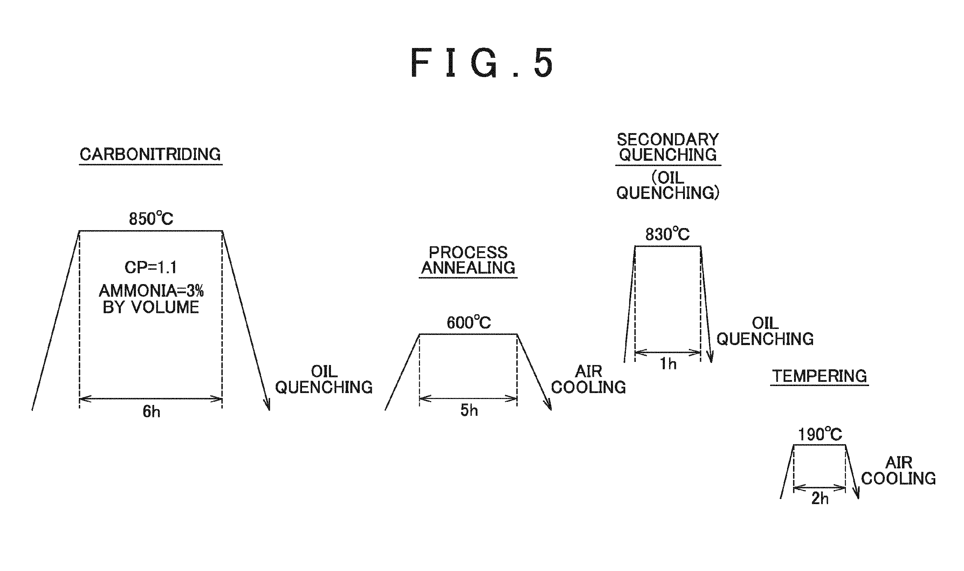

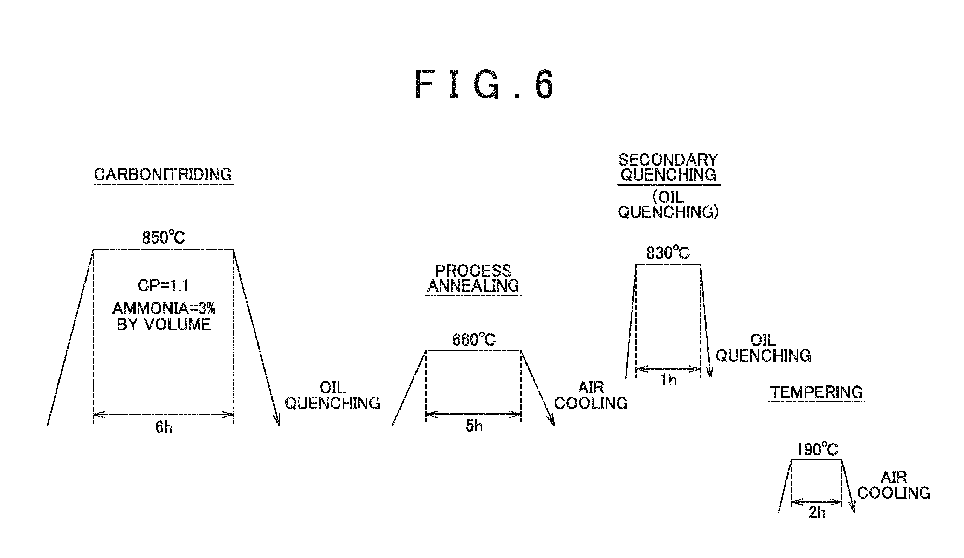

Subsequently, the obtained semi-finished products were subjected to a heat treatment (see Table 1 and FIG. 3 to FIG. 6). Portions of the semi-finished products obtained through the heat treatment, which form the raceway surfaces (the outer ring member, the inner ring member), and portions of the semi-finished products obtained through the heat treatment, which form the rolling surface (the rolling element) were subjected to grinding to obtain the rolling sliding members (the first outer ring member 2a, the second outer ring member 2b, the inner ring member 3a and the tapered roller 4) according to the first example and the first to fifth comparative examples. Then, the rolling sliding members according to the first example and the first to fifth comparative examples were used to manufacture the four-row tapered roller bearing devices. The heat treatment conditions in the first example (Conditions (A) shown in Table 1) are shown in FIG. 3. The heat treatment conditions in the first and fifth comparative examples (Conditions (B) shown in Table 1) are shown in FIG. 4. The heat treatment conditions in the second and third comparative examples (Conditions (C) shown in Table 1) are shown in FIG. 5. The heat treatment conditions in the fourth comparative example (Conditions (D) shown in Table 1) are shown in FIG. 6.

The heat treatment conditions (A) shown in FIG. 3 are conditions that the semi-finished product is set in the carbonitriding furnace, the semi-finished product is heated at 850°C for 6 hours in the carbonitriding atmosphere having a carbon potential of 0.9 and an ammonia concentration of 3% by volume and is quenched by oil to 100°C (carbonitriding), and, after that, the semi-finished product is heated at 660°C for 5 hours and subjected to radiational cooling (process annealing), heated at 830°C for 1 hour and is quenched by oil to 100°C (secondary quenching), and heated at 190°C for 2 hours and subjected to radiational cooling (tempering). The heat treatment conditions shown in FIG. 3 satisfy the heat treatment conditions in the above-described method of manufacturing the rolling sliding member according to the invention. The heat treatment conditions (B) shown in FIG. 4 are conditions that the semi-finished product is set in the carbonitriding furnace, the semi-finished product is heated at 960°C for 5 hours in the carburizing atmosphere having a carbon potential of 1.4 (carburizing), and then, the semi-finished product is heated at 860°C for 2 hours in the carbonitriding atmosphere having a carbon potential of 1.1 and an ammonia concentration of 4% by volume and is quenched by oil to 100°C (carbonitriding), and, after that, the semi-finished product is heated at 660°C for 5 hours and subjected to radiational cooling (process annealing), heated at 790°C for 1 hour and is quenched by oil to 100°C (secondary quenching), and heated at 190°C for 2 hours and subjected to radiational cooling (tempering). The heat treatment conditions (C) shown in FIG. 5 are conditions that the semi-finished product is set in the carbonitriding furnace, the semi-finished product is heated at 850°C for 6 hours in the carbonitriding atmosphere having a carbon potential of 1.1 and an ammonia concentration of 3% by volume and quenched by oil to 100°C (carbonitriding), and then, the semi-finished product is heated at 600°C for 5 hours and subjected to radiational cooling (process annealing), heated at 830°C for 1 hour and is quenched by oil to 100°C (secondary quenching), and heated at 190°C for 2 hours and subjected to radiational cooling (tempering). The heat treatment conditions (D) shown in FIG. 6 are conditions that the semi-finished product is set in the carbonitriding furnace, the semi-finished product is heated at 850°C for 6 hours in the carbonitriding atmosphere having a carbon potential of 1.1 and an ammonia concentration of 3% by volume and quenched by oil to 100°C (carbonitriding), and then, the semi-finished product is heated at 660°C for 5 hours and subjected to radiational cooling (process annealing), heated at 830°C for 1 hour and is quenched by oil to 100°C (secondary quenching), and heated at 190°C for 2 hours and subjected to radiational cooling (tempering).

For each of the rolling sliding members (tapered rollers) obtained according to the methods in the first example and the first to fifth comparative examples, there were checked the carbon content in the surface layer in the range from the surface to the depth of 0.05 mm (hereinafter, referred to as "surface carbon content"), the nitrogen content in the surface layer in the range from the surface to the depth of 0.05 mm (hereinafter, referred to as "surface nitrogen content"), the hardness at a position at a depth of 0.1 mm from the surface (hereinafter, referred to as "surface hardness"), the amount of retained austenite at a position at a depth of 0.1 mm from the surface (hereinafter, referred to as "surface retained austenite amount"), the area ratio of carbide at a position at a depth of 0.03 mm from the surface (hereinafter, referred to as "surface carbide area ratio"), the hardness at the sectional center portion (hereinafter, referred to as "internal hardness") and the martensitic transformation ratio at the sectional center portion (hereinafter, referred to as "internal martensitic transformation ratio").

The surface carbon content was obtained as follows. Each of the rolling sliding members (tapered rollers) obtained according to the methods in the first example and the first to fifth comparative examples was cut in the depth direction from the surface of each rolling contact surface, and then the carbon content in the surface layer in the range from the surface to the depth of 0.05 mm was measured. The surface nitrogen content was obtained as follows. Each of the rolling sliding members (tapered rollers) obtained according to the methods in the first example and the first to fifth comparative examples was cut in the depth direction from the surface of each rolling contact surface, and then the nitrogen content in the surface layer in the range from the surface to the depth of 0.05 mm was measured. The surface hardness was measured as follows. Each of the rolling sliding members (tapered rollers) obtained according to the methods in the first example and the first to fifth comparative examples was cut in the depth direction from the surface of the rolling contact surface, and then the Vickers indenter was placed at a position at a depth of 0.1 mm from the surface to measure the surface hardness. In addition, the measured Vickers hardness was converted into the Rockwell C-scale hardness. The surface retained austenite amount was obtained as follows. Each of the rolling sliding members (tapered rollers) obtained according to the methods in the first example and the first to fifth comparative examples was electrolytically-ground from the surface of the rolling contact surface to a depth of 0.1 mm, and the amount of retained austenite on the electrolytically-ground surface was measured. The surface carbide area ratio was calculated as follows. Each of the rolling sliding members (tapered rollers) obtained according to the methods in the first example and the first to fifth comparative examples was cut at a depth of 0.03 mm from the rolling contact surface, was immersed in an etchant containing 5% of picric acid alcohol by mass for ten seconds to be corroded, and then the SE image (1000 $\mu$m$^2$) of the cut surface was captured by a scanning electron microscope (produced by Shimadzu Corporation, Product Name: EPMA-1600, 3000x magnification) to check the ratio of the area of carbide to the area of the SE image. The internal hardness was measured as follows. Each of the rolling sliding members (tapered rollers) obtained according to the methods in the first example and the first to fifth comparative examples was cut in the depth direction from the surface of the rolling contact surface, and then the Vickers indenter was placed at the sectional center portion to measure the internal hardness. In addition, the measured Vickers hardness was converted into the Rockwell C-scale hardness. The internal martensitic transformation ratio was calculated as follows. The SE image (three to five fields of view, 36000 to 60000 $\mu$m$^2$) of the ground surface of the sectional center portion was captured by a scanning electron microscope (produced by Shimadzu Corporation, Product Name: EPMA-1600, 1000x magnification), the portion corresponding to martensite was shaded, and the ratio of the area of the shaded portion to the area of the SEM image was calculated.

In a first test example, the results obtained by checking the surface carbon content, the surface nitrogen content, the surface hardness, the surface retained austenite amount, the surface carbide area ratio, the internal hardness and the internal martensitic transformation ratio are shown in Table 2.

[Table 2]

| | Surface C Content (mass%) | Surface N Content (mass%) | Surface Hardness Vickers Hardness (Rockwell C-scale Hardness) (HRC) | Surface Retained Austenite Amount (mass%) | Surface Carbide Area Ratio (%) | Internal Hardness Vickers Hardness (Rockwell C-scale Hardness) (HRC) | Internal Martensitic Transformation Ratio (%) |
|---|---|---|---|---|---|---|---|
| First Example | 1 | 0.15 | 730 (61.5) | 23 | 5.8 | 405 (41) | 50 |
| First Comparative Example | 0.9 | 0.1 | 730 (61.5) | 20 | 7 | 365 (37) | 20 |
| Second Comparative Example | 0.9 | 0.025 | 720 (61) | 28 | 8 | 415 (42) | 65 |
| Third Comparative Example | 1.1 | 0.025 | 730 (61.5) | 35 | 7.7 | 373 (38) | 50 |
| Fourth Comparative Example | 0.9 | 0.2 | 720 (61) | 22 | 7.2 | 390 (40) | 55 |
| Fifth Comparative Example | 0.95 | 0.6 | 655 (58) | 45 | 5.5 | 336 (33) | 5 |

In addition, the corrosion resistance (rust resistance) of each of the rolling sliding members (tapered rollers) obtained according to the methods in the first example and the first to fifth comparative examples was evaluated. Specimens prepared according to the methods in the first example and the first to fifth comparative examples were used to evaluate rust resistance. The specimens were prepared as follows. First, circular cylindrical blanks having a diameter of 32 mm, made of the steel materials used in the first example and the first to fifth comparative examples (steel materials having compositions shown in Table 1), were subjected to heat treatment under the same heat treatment conditions as those of the first example and the first to fifth comparative examples shown in Table 1. Subsequently, the blanks after heat treatment were ground to obtain small pieces having dimensions of 20 mm x 30 mm x 8 mm. The 20 mm x 30 mm surfaces of the obtained small pieces were subjected to grinding finishing so as to have a mean roughness of 0.4 $\mu$m to thereby obtain the specimens of which rust resistance is evaluated (hereinafter, denoted by "specimens A"). Note that the obtained specimens A have the same surface and internal qualities as those of each of the rolling sliding members shown in Table 2. The obtained specimens A were kept at 50°C for 96 hours in the atmosphere having 95% relative humidity by volume. After that, the macro image (600 mm$^2$) of the surface of each of the specimens obtained according to the methods in the first example and the first to fifth comparative examples was captured, and the ratio of the area of rust to the area of the macro image (rust area ratio) was calculated.

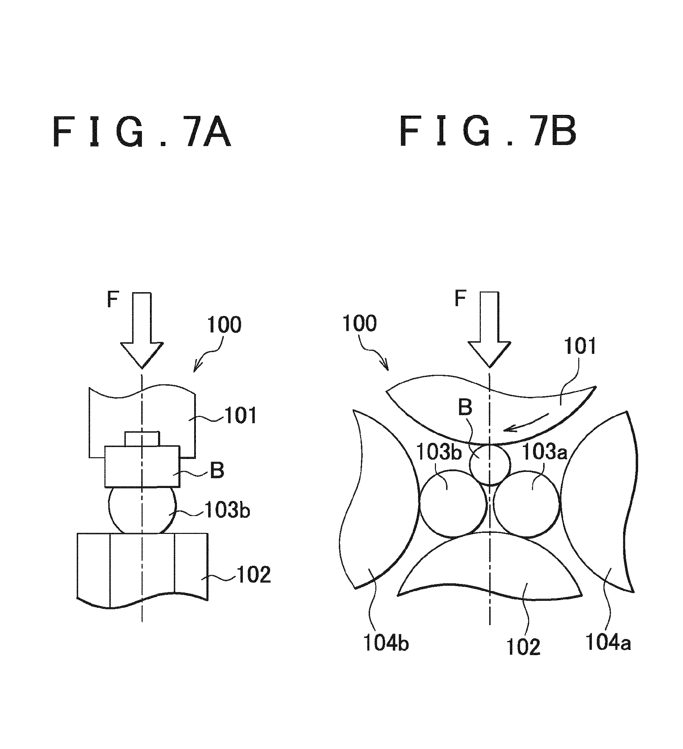

Furthermore, the useful life of each of the rolling sliding members (tapered rollers) obtained according to the methods in the first example and the first to fifth comparative examples was evaluated. The specimens prepared according to the methods in the first example and the first to fifth comparative examples were used to evaluate the useful life. The specimens were prepared as follows. First, circular cylindrical blanks having a diameter of 32 mm, made of the steel materials used in the first example and the first to fifth comparative examples (steel materials having compositions shown in Table 1), were subjected to a heat treatment under the same heat treatment conditions as those of the first example and the first to fifth comparative examples shown in Table 1. Subsequently, the blanks after heat treatment were ground to obtain circular cylindrical specimens having a diameter of 20 mm and a height of 36 mm (hereinafter, denoted by "specimens B"). Note that the obtained specimens B have the same surface and internal qualities as those of each of the rolling sliding members shown in Table 2. The obtained specimens B were set in the testing machine shown in FIG. 7A, the testing machine was operated under the following conditions, and then the useful life of each specimen B until flaking occurs at the specimen B was checked. Then, the relative value of the average useful life of each specimen with respect to the average useful life of the specimen B obtained from the steel material used in the first comparative example was obtained.

Maximum contact stress: 5.8 GPa

Frequency: 285 Hz

Lubrication: Turbine oil VG68 Circulation

Oil temperature: 60°C

Number of specimens: 5

Note that, in the testing machine, the specimen B and two steel balls 103a, 103b are arranged between a drive wheel 101 and a driven wheel 102 in this order from the drive wheel 101-side. The specimen B is in sliding contact with the drive wheel 101 and the two steel balls 103a, 103b. The two steel balls 103a, 103b are slidably arranged between driven wheels 104a, 104b with a predetermined distance maintained therebetween.

In addition, specimens were prepared according to the methods in the first example and the first to fifth comparative examples as follows. The crack resistance (fracture toughness) of each of the rolling sliding members (tapered rollers) obtained according to the methods in the first example and the first to fifth comparative examples was checked. The specimens prepared according to the methods in the first example and the first to fifth comparative examples were used to evaluate the internal fracture toughness. The specimens were prepared as follows. First, circular cylindrical blanks having a diameter of 90 mm, made of the steel materials used in the first example and the first to fifth comparative examples (steel materials having compositions shown in Table 1), were subjected to a heat treatment under the same conditions as those of the first example and the first to fifth comparative examples shown in Table 1. Small tensile test specimens having a shape compliant with ASTM E399-78 (25.4 mm x 63.5 mm x 61 mm, hereinafter, denoted by "specimens C") were taken from portions between the center portions and the peripheral portions of the blanks after heat treatment. Note that the obtained specimens C have the same internal qualities as those of the rolling sliding members shown in Table 2. The obtained specimens were subjected to fracture toughness test in accordance with ASTM E399-78 to measure the plane-strain fracture toughness value ($K_{IC}$). After that, the internal fracture toughness value ($K_{IC}$ of the evaluation target specimen / $K_{IC}$ of the specimen according to the first comparative example) was obtained.

In the first test example, the results obtained by calculating the rust area ratio (relative value), the average useful life (relative value) and the fracture toughness value ($K_{IC}$) (relative value) are shown in Table 3. Note that, "rust area ratio (relative value)" refers to a relative value of the rust area ratio of an evaluation target specimen when the rust area ratio of the specimen in the first test example is 1, "average useful life (relative value)" refers to a relative value of the average useful life of an evaluation target specimen when the average useful life of the specimen in the first comparative example is 1, and "fracture toughness value ($K_{IC}$) (relative value)" refers to a relative value of the fracture toughness value of an evaluation target specimen when the fracture toughness value of the specimen in the first comparative example is 1. The corrosion resistance, the useful life, and the crack resistance are evaluated according to the following evaluation criteria.

[Evaluation criteria]

(Corrosion resistance)

When the rust area ratio (relative value) is lower than or equal to 0.9, the specimen has sufficient corrosion resistance as a rolling sliding member.
When the rust area ratio (relative value) exceeds 0.9, corrosion resistance is insufficient.

(Useful life)

When the average useful life (relative value) exceeds 1.2, the specimen has a sufficiently long useful life as a rolling sliding member.
When the average useful life (relative value) is lower than or equal to 1.2, the specimen does not have a sufficiently long useful life as a rolling sliding member.

(Crack resistance)

When the fracture toughness value ($K_{IC}$) (relative value) is higher than or equal to 1.2, the specimen has sufficient crack resistance as a rolling sliding member. When the fracture toughness value ($K_{IC}$) (relative value) is lower than 1.2, crack resistance is insufficient.

[Table 3]

| Sample | Rust area ratio (relative value) | Average useful life (relative value) | Fracture toughness value ($K_{IC}$) (relative value) |
|---|---|---|---|
| First Example | 0.8 | 1.5 | 1.2 |
| First Comparative Example | 1 | 1 | 1 |
| Second Comparative Example | 0.9 | 1.2 | 1.2 |
| Third Comparative Example | 1.4 | 1 | 0.8 |
| Fourth Comparative Example | 0.9 | 1 | 0.7 |
| Fifth Comparative Example | 1.2 | 0.8 | 0.5 |

It is apparent from the results shown in Table 3 that, in the specimen obtained according to the method in the first example, the rust area ratio (relative value) is 0.8, the average useful life (relative value) is 1.5, and the fracture toughness value (relative value) is 1.2. It is understood from the results that the specimen obtained according to the method in the first example has sufficient corrosion resistance, a sufficiently long useful life and sufficient crack resistance as a rolling sliding member. Especially, the corrosion resistance of the specimen obtained according to the method in the first example is higher than the corrosion resistance of a specimen made of a base material obtained by subjecting the steel material to carburizing (data is not shown). In contrast to this, it is understood that at least one of the corrosion resistance, the useful life and the crack resistance of each of the specimens obtained according to the methods in the first to fifth comparative examples is insufficient.
The steel material used in the method in the first example satisfies all the conditions (hereinafter, simply referred to as "steel material conditions") that the steel material contains 0.16 to 0.19% of carbon by mass, 0.15 to 0.55% of silicon by mass, 0.20 to 1.55% of manganese by mass, 2.4 to 3.2% of chromium by mass, the remaining part is formed of iron and incidental impurities, the steel material contains 0.01 to 0.2% of nickel by mass as an incidental impurity and higher than or equal to 0.001% and less than 0.1% of molybdenum by mass as an incidental impurity, and the hardenability index expressed by Formula (I) is higher than or equal to 5.4. The steel material is inexpensive because the nickel content and the molybdenum content are each smaller than 0.2% by mass. On the other hand, the steel materials used in the methods in the first to fifth comparative examples do not satisfy the steel material conditions. Especially, the steel materials used in the methods in the first to third and fifth comparative examples each contain large amounts of nickel and molybdenum, and therefore these steel materials are expensive.

As shown in Table 2, the rolling sliding member obtained in the first example has the qualities (hereinafter, simply referred to as "surface and internal qualities" where appropriate) in which the surface carbon content is 0.8 to 1.2% by mass, the surface nitrogen content is 0.05 to 0.4% by mass, the surface hardness as the Vickers hardness is 690 to 800, the surface retained austenite amount is 15 to 40% by mass, the surface carbide area ratio is 1.5 to 8% , the internal hardness as the Vickers hardness is 300 to 510, and the internal martensitic transformation ratio is 50 to 100%. In contrast to this, as shown in Table 2, in the rolling sliding members obtained in the first to fifth comparative examples, at least one of the surface carbon content, the surface nitrogen content, the surface hardness, the surface retained austenite amount, the surface carbide area ratio, the internal hardness, and the internal martensitic transformation ratio does not satisfy the surface and internal qualities described above.

It is understood from the above results that, if the steel material that satisfies all the above-described steel material conditions is used and is subjected to heat treatment under the conditions that satisfy the heat treatment conditions in the method of manufacturing the rolling sliding member according to the invention to satisfy all the surface and internal qualities, it is possible to manufacture, at low cost, a rolling sliding member that exhibits satisfactory corrosion resistance and crack resistance and that has a sufficiently long useful life. Especially, because such a rolling sliding member has corrosion resistance higher than that of a rolling sliding member made of a base material obtained by subjecting a steel material that satisfies the steel material conditions to carburizing, it is possible to further effectively suppress a decrease in the rolling fatigue life of a bearing component due to rust. Further, with such a rolling sliding member, it is possible to improve the corrosion resistance, the crack resistance, and the useful life of a rolling bearing such as a multi-row tapered roller bearing device.

With the rolling sliding member, the method of manufacturing the rolling sliding member, and the rolling bearing according to the invention, it is possible to ensure satisfactory corrosion resistance and crack resistance, and ensure a sufficiently long useful life even under an environment where rust is easily formed.

Claims

1. A rolling sliding member, **characterized in that**:

    the rolling sliding member is made of a base material that is obtained from a steel material which contains 0.16 to 0.19% of carbon by mass, 0.15 to 0.35% of silicon by mass, 0.20 to 1.55% of manganese by mass, and 2.5 to 3.2% of chromium by mass, of which remaining part is formed of iron and incidental impurities, and which contains 0.01 to 0.2% of nickel by mass as an incidental impurity and higher than or equal to 0.001 % and lower than 0.15% of molybdenum by mass as an incidental impurity, and which has a hardenability index of higher than or equal to 5.4, the hardenability index being expressed by Formula (I):

$$X_C \bullet X_{Si} \bullet X_{Mn} \bullet X_{Cr} \bullet X_{Ni} \bullet X_{Mo} \qquad (I)$$

    (where $X_C$ is 0.5346 x carbon content (mass%) + 0.0004, $X_{Si}$ is 0.7xsilicon content (mass%) + 1, $X_{Mn}$ when a manganese content is higher than or equal to 0.20% by mass and lower than 1.25% by mass is 3.3844 x manganese content (mass%) + 0.9826, $X_{Mn}$ when a manganese content is higher than or equal to 1.25% by mass and lower than or equal to 1.55% by mass is 5.1 x manganese content (mass%) - 1.12, $X_{Cr}$ is 2.1596 x chromium content (mass%) + 1.0003, $X_{Ni}$ is 0.382 x nickel content (mass%) + 0.99, and $X_{Mo}$ is 3 x molybdenum content (mass%) + 1), the base material being obtained by subjecting the steel material to carbonitriding to achieve an effective case depth of 1.5 to 8 mm;
    the rolling sliding member has a rolling sliding surface that is in at least one of rolling contact and sliding contact relative to an opposed member; and
    a carbon content in a surface layer in a range from a surface of the rolling sliding surface to a depth of 0.05 mm is 0.8 to 1.2% by mass, a nitrogen content in the surface layer in the range from the surface of the rolling sliding surface to a depth of 0.05 mm is 0.05 to 0.4% by mass, a Vickers hardness at a position at a depth of 0.1 mm from the surface is 690 to 800, an amount of retained austenite at a position at a depth of 0.1 mm from the surface is 15 to 40% by volume, an area ratio of carbide at a position at a depth of 0.03 mm from the surface is 1.5 to 8%, a Vickers hardness of a portion that is located at a center, in an axially longitudinal direction, of a portion at which the rolling sliding surface is formed and that is located at a center, in a thickness direction, of the portion at which the rolling sliding surface is formed is 300 to 510, and a martensitic transformation ratio of the portion that is located at the center, in the axially longitudinal direction, of the portion at which the rolling sliding surface is formed and that is located at the center, in the thickness direction, of the portion at which the rolling sliding surface is formed is 50 to 100%.

2. A rolling bearing comprising:

   an outer ring that has an inner peripheral surface on which a raceway portion is formed;
   an inner ring that has an outer peripheral surface on which a raceway portion is formed; and
   a plurality of rolling elements that are arranged between the raceway portion of the outer ring and the raceway portion of the inner ring, **characterized in that**
   at least one of the outer ring, the inner ring and each of the rolling elements is the rolling sliding member according to claim 1.

3. A method of manufacturing a rolling sliding member, **characterized by** comprising:

   (A) a pre-stage machining step in which a semi-finished product is obtained by machining, into a predetermined shape, a steel material which contains 0.16 to 0.19% of carbon by mass, 0.15 to 0.35% of silicon by mass, 0.20 to 1.55% of manganese by mass, 2.5 to 3.2% of chromium by mass, of which remaining part is formed of iron and incidental impurities, and which contains 0.01 to 0.2% of nickel by mass as an incidental impurity and higher than or equal to 0.001% and lower than 0.15% of molybdenum by mass as an incidental impurity, and which has a hardenability index of higher than or equal to 5.4, the hardenability index being expressed by Formula (I):

$$X_C \bullet X_{Si} \bullet X_{Mn} \bullet X_{Cr} \bullet X_{Ni} \bullet X_{Mo} \qquad (I)$$

   (where $X_C$ is 0.5346 x carbon content (mass%) + 0.0004, $X_{Si}$ is 0.7xsilicon content (mass%) + 1, $X_{Mn}$ when a manganese content is higher than or equal to 0.20% by mass and lower than 1.25% by mass is 3.3844 x manganese content (mass%) + 0.9826, $X_{Mn}$ when a manganese content is higher than or equal to 1.25% by mass and lower than or equal to 1.55% by mass is 5.1 x manganese content (mass%) - 1.12, $X_{Cr}$ is 2.1596 x chromium content (mass%) + 1.0003, $X_{Ni}$ is 0.382 x nickel content (mass%) + 0.99, and $X_{Mo}$ is 3 x molybdenum content (mass%) + 1);
   (B) a carbonitriding step in which the semi-finished product obtained in the step (A) is heated at 930 to 990°C in a carbonitriding atmosphere having a carbon potential of 0.8 to 1.1 and an ammonia concentration of 2 to 10% by volume, is then rapidly quenched to cause the semi-finished product to have an effective case depth of 1.5 to 8 mm;
   (C) a process annealing step in which the semi-finished product obtained in the step (B) is heated at 630 to 690°C;
   (D) a quenching step in which the semi-finished product after the step (C) is subjected to quenching at 820 to 850°C;
   (E) a tempering step in which the semi-finished product after the step (D) is subjected to tempering at 160 to 200°C; and
   (F) a finishing step in which the semi-finished product after the step (E) is subjected to finishing to form a rolling sliding surface, thereby obtaining a rolling sliding member in which a carbon content in a surface layer in a range from a surface of the rolling sliding surface to a depth of 0.05 mm is 0.8 to 1.2% by mass, a nitrogen content in the surface layer in the range from the surface of the rolling sliding surface to a depth of 0.05 mm is 0.05 to 0.4% by mass, a Vickers hardness at a position at a depth of 0.1 mm from the surface is 690 to 800, an amount of retained austenite at a position at a depth of 0.1 mm from the surface is 15 to 40% by volume, an area ratio of carbide at a position at a depth of 0.03 mm from the surface is 1.5 to 8%, a Vickers hardness of a portion that is located at a center, in an axially longitudinal direction, of a portion at which the rolling sliding surface is formed and that is located at a center, in a thickness direction, of the portion at which the rolling sliding surface is formed is 300 to 510, and a martensitic transformation ratio of the portion that is located at the center, in the axially longitudinal direction, of the portion at which the rolling sliding surface is formed and that is located at the center, in the thickness direction, of the portion at which the rolling sliding surface is formed is 50 to 100%.

# FIG.1

# FIG.2A FIG.2B FIG.2C FIG.2D

21

2b2 22

2b1

| CARBONITRIDING PROCESS | ⇒ | PROCESS ANNEALING |

2b3 2b4

PRE-STAGE MACHINING

# FIG.2G FIG.2F FIG.2E

2b2 2b

2b1

⇐ | TEMPERING | ⇐ | SECONDARY QUENCHING |

2b3 2b4

FINISHING

# FIG.3

CARBONITRIDING

850°C

CP=0.9
AMMONIA=3%
BY VOLUME

6h

OIL
QUENCHING

PROCESS
ANNEALING

660°C

5h

AIR
COOLING

SECONDARY
QUENCHING
(OIL
QUENCHING)

830°C

1h

OIL
QUENCHING

TEMPERING

190°C

2h

AIR
COOLING

EP 2 716 784 A1

# F I G . 4

EP 2 716 784 A1

# F I G . 5

EP 2 716 784 A1

CARBONITRIDING

850°C

CP=1.1

AMMONIA=3%
BY VOLUME

6h

OIL
QUENCHING

PROCESS
ANNEALING

600°C

5h

AIR
COOLING

SECONDARY
QUENCHING
(OIL
QUENCHING)

830°C

1h

OIL
QUENCHING

TEMPERING

190°C

2h

AIR
COOLING

# F I G . 6

# FIG.7A

# FIG.7B

Europäisches
Patentamt

European
Patent Office

Office européen
des brevets

## EUROPEAN SEARCH REPORT

Application Number

EP 13 18 7007

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2011 225936 A (DAIDO STEEL CO LTD) 10 November 2011 (2011-11-10) * Abstract; tables 1,2 : alloy no. "5", fig. 2, [0045]-[0048] * ----- | 1-3 | INV. C22C38/00 |
| X | JP H11 199983 A (NISSAN MOTOR; DAIDO STEEL CO LTD) 27 July 1999 (1999-07-27) * Abstract; table 1: alloy no. "A"; fig. 1 with [0044] * ----- | 1-3 | |
| X | JP H09 296250 A (DAIDO STEEL CO LTD) 18 November 1997 (1997-11-18) * Abstract; table 1: alloy no. "e" * ----- | 1-3 | |
| A | EP 1 355 071 A1 (NSK LTD [JP]) 22 October 2003 (2003-10-22) * the whole document * ----- | 1-3 | |
| A | US 2002/050308 A1 (TANAKA HIROMASA [JP] ET AL) 2 May 2002 (2002-05-02) * the whole document * ----- | 1-3 | TECHNICAL FIELDS SEARCHED (IPC) |
| A | US 2012/018050 A1 (KUBOTA MANABU [JP] ET AL) 26 January 2012 (2012-01-26) * the whole document * ----- | 1-3 | C22C |

The present search report has been drawn up for all claims

| Place of search | Date of completion of the search | Examiner |
|---|---|---|
| Munich | 13 January 2014 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 18 7007

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2014

| Patent document cited in search report | | Publication date | Patent family member(s) | | Publication date |
|---|---|---|---|---|---|
| JP 2011225936 | A | 10-11-2011 | NONE | | |
| JP H11199983 | A | 27-07-1999 | JP | 3410947 B2 | 26-05-2003 |
| | | | JP | H11199983 A | 27-07-1999 |
| JP H09296250 | A | 18-11-1997 | NONE | | |
| EP 1355071 | A1 | 22-10-2003 | EP | 1355071 A1 | 22-10-2003 |
| | | | JP | 4348964 B2 | 21-10-2009 |
| | | | JP | 2004003608 A | 08-01-2004 |
| | | | US | 2003219178 A1 | 27-11-2003 |
| US 2002050308 | A1 | 02-05-2002 | JP | 2002060847 A | 28-02-2002 |
| | | | US | 2002050308 A1 | 02-05-2002 |
| US 2012018050 | A1 | 26-01-2012 | CN | 102341520 A | 01-02-2012 |
| | | | EP | 2514847 A1 | 24-10-2012 |
| | | | JP | 4927234 B2 | 09-05-2012 |
| | | | KR | 20110128282 A | 29-11-2011 |
| | | | US | 2012018050 A1 | 26-01-2012 |
| | | | WO | 2011114836 A1 | 22-09-2011 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005154784 A
- JP 2007077422 A